# EUROPEAN PATENT APPLICATION

(11) **EP 4 625 633 A1**
(43) Date of publication of application: **01.10.2025**
(21) Application number: 24203693.7
(22) Date of filing: 30.09.2024
(51) Int. Cl.: H01M 50/152, H01M 50/169, H01M 50/342

(54) **COVER PLATE ASSEMBLY OF BATTERY CELL, BATTERY CELL, BATTERY ASSEMBLY, AND ELECTRIC DEVICE**

(30) Priority: 27.03.2024 CN 202410373639
(71) Applicant: BYD Company Limited, Shenzhen, Guangdong 518118 (CN)
(72) Inventor: CHEN, Jiankang, Shenzhen (CN); LIU, Yanchu, Shenzhen (CN); PI, Jingwu, Shenzhen (CN); MA, Zhiying, Shenzhen (CN); WANG, Yadong, Shenzhen (CN)
(74) Representative: Taor, Simon Edward William

(57) **Abstract**

The present disclosure discloses a cover plate assembly of a battery cell, a battery cell, a battery assembly, and an electric device. The cover plate assembly of the battery cell includes a cover plate body and an explosion-proof valve. A peripheral wall of the cover plate body is adapted to connect to a housing of the battery cell. The explosion-proof valve is arranged on the cover plate body. A minimum spacing between the explosion-proof valve and the peripheral wall of the cover plate body ranges from 0.5 mm to 3.05 mm. In the cover plate assembly of the battery cell according to embodiments of the present disclosure, the minimum spacing between the explosion-proof valve and the peripheral wall of the cover plate body is limited, to avoid damage to the explosion-proof valve during assembly of the cover plate assembly, extend service life of the explosion-proof valve, and ensure operation performance of the explosion-proof valve, so as to ensure operation performance of the cover plate assembly

## Description

### FIELD

The present disclosure relates to the field of battery technologies, and in particular, to a cover plate assembly of a battery cell, a battery cell, a battery assembly, and an electric device.

### BACKGROUND

In an existing battery cell, an explosion-proof valve is usually arranged on a cover plate assembly of the battery cell to ensure that gas can be smoothly exhausted when pressure in the battery cell is large.

However, currently, the explosion-proof valve is likely to be damaged during assembly of the cover plate assembly. This shortens service life of the explosion-proof valve and degrades operation performance of the explosion-proof valve.

### SUMMARY

The present disclosure is intended to resolve at least one of technical problems existing in the related art. In view of this, a first objective of the present disclosure is to provide a cover plate assembly of a battery cell. Damage to an explosion-proof valve can be avoided during assembly of the cover plate assembly, to ensure operation performance of the explosion-proof valve. This resolves a technical problem in the related art that an explosion-proof valve is likely to be damaged during assembly of a cover plate assembly.

A second objective of the present disclosure is to provide a battery cell having the cover plate assembly.

Athird objective of the present disclosure is to provide a battery assembly having the battery cell.

A fourth objective of the present disclosure is to provide an electric device having the battery assembly.

A cover plate assembly of a battery cell according to embodiments of the present disclosure includes: a cover plate body, a peripheral wall of the cover plate body being adapted to connect to a housing of the battery cell; and an explosion-proof valve, the explosion-proof valve being arranged on the cover plate body, and a value of a minimum spacing between the explosion-proof valve and the peripheral wall of the cover plate body ranging from 0.5 mm to 3.05 mm.

In the cover plate assembly of the battery cell according to the embodiments of the present disclosure, the explosion-proof valve is arranged to ensure that gas can be smoothly exhausted when pressure in the battery cell is large, so as to ensure safety of using the battery cell and extend service life of the battery cell. In addition, the minimum spacing between the explosion-proof valve and the peripheral wall of the cover plate body is set to range from 0.5 mm to 3.05 mm, so that the explosion-proof valve can be arranged away from the peripheral wall of the cover plate body, to avoid damage to the explosion-proof valve during connection between the cover plate body and the housing of the battery cell to some extent, ensure operation performance of the explosion-proof valve, and extend service life of the explosion-proof valve, so as to ensure operation performance of the battery cell.

In some embodiments, the explosion-proof valve extends along a circumferential direction of the cover plate body.

In some embodiments, the explosion-proof valve is formed into a strip shape extending along the circumferential direction of the cover plate body, a connection line between one endpoint of the explosion-proof valve and a center of the cover plate body is a first connection line, a connection line between the other endpoint of the explosion-proof valve and the center of the cover plate body is a second connection line, and an included angle between the first connection line and the second connection line ranges from 10° to 225°.

In some embodiments, the explosion-proof valve is formed into an arc shape extending along the circumferential direction of the cover plate body.

In some embodiments, multiple explosion-proof valves are arranged on the cover plate body, the multiple explosion-proof valves are arranged spaced away along the circumferential direction of the cover plate body, and at least one explosion-proof valve extends along the circumferential direction of the cover plate body.

In some embodiments, a first mounting hole is provided on the cover plate body, and the explosion-proof valve is arranged in the first mounting hole.

In some embodiments, the explosion-proof valve is in an arc shape extending along a circumferential direction of the cover plate body, and a shape of the first mounting hole matches the shape of the explosion-proof valve.

In some embodiments, at least one first reinforcing rib is arranged in the first mounting hole.

In some embodiments, a width of the first reinforcing rib ranges from 0.5 mm to 2.5 mm.

In some embodiments, the cover plate assembly further includes a terminal, the terminal being arranged on the cover plate body, a peripheral wall of the terminal being connected to the cover plate body, and a value of a minimum spacing between the explosion-proof valve and the peripheral wall of the terminal ranging from 0.5 mm to 20 mm.

In some embodiments, the cover plate assembly further includes an insulating separator, the insulating separator being arranged on one side of the cover plate body, and a communicating hole that at least partially directly faces the first mounting hole being provided on the insulating separator.

In some embodiments, at least one second reinforcing rib is arranged in the communicating hole.

In some embodiments, a width of the second reinforcing rib ranges from 0.3 mm to 2 mm.

In some embodiments, a stop boss is arranged on a first surface, away from the cover plate body, of the insulating separator, the stop boss is arranged near the communicating hole, and the stop boss is adapted to stop a collecting pan.

In some embodiments, a height of the stop boss ranges from 0.5 mm to 2 mm; and/or a side, away from the insulating separator, of the stop boss has a stop surface, the stop surface stops the collecting pan, and an area S of the stop surface > 1.5 mm².

In some embodiments, multiple stop bosses are arranged spaced away, and a distance between two adjacent stop bosses located on a same side of the communicating hole is L, where 0 mm < L ≤ 6.5 mm.

In some embodiments, a peripheral protrusion is arranged at a periphery of a first surface, away from the cover plate body, of the insulating separator, and an avoidance port for avoiding a collecting pan is provided on the peripheral protrusion.

A battery cell according to embodiments of the present disclosure includes: a housing; and a cover plate body, the cover plate body being arranged in the housing, and the cover plate body being the foregoing cover plate assembly.

In the battery cell according to the embodiments of the present disclosure, the foregoing cover plate assembly is used, so that operation performance of the explosion-proof valve can be effectively ensured, to improve operation performance of the battery cell and ensure safety of using the battery cell.

In some embodiments, an explosion-proof valve is in an arc shape extending along a circumferential direction of the cover plate body, and a circle center of the explosion-proof valve coincides with a geometric center of the battery cell.

In some embodiments, the battery cell is a cylindrical battery.

A battery assembly according to embodiments of the present disclosure includes multiple battery cells.

In the battery assembly according to the embodiments of the present disclosure, the foregoing battery cell is used, to improve operation performance of the battery assembly and ensure safety of using the battery assembly.

An electric device according to embodiments of the present disclosure includes the foregoing battery assembly.

In the electric device according to the embodiments of the present disclosure, the foregoing battery assembly is used, to improve operation performance of the electric device and ensure safety of using the electric device, so as to improve user experience.

Additional aspects and advantages of the present disclosure become clear in the following descriptions or are learned from practice of the present disclosure.

### BRIEF DESCRIPTION OF THE DRAWINGS

The foregoing and/or other aspects and advantages of the present disclosure become clear and readily appreciated from the following descriptions made with reference to the drawings.
FIG. 1 is an exploded view of a positive electrode cover plate assembly and a positive electrode collecting pan according to some embodiments of the present disclosure, where the positive electrode collecting pan is in an unfolded state;
FIG. 2 is a schematic diagram of a positive electrode cover plate assembly and a positive electrode collecting pan according to some embodiments of the present disclosure, where the positive electrode collecting pan is in an unfolded state;
FIG. 3 is a top view of a positive electrode cover plate assembly and a positive electrode collecting pan according to some embodiments of the present disclosure, where the positive electrode collecting pan is in an unfolded state;
FIG. 4 is a top view of a positive electrode cover plate assembly and a positive electrode collecting pan according to some other embodiments of the present disclosure, where the positive electrode collecting pan is in an unfolded state;
FIG. 5 is a top view of a negative electrode cover plate assembly and a negative electrode collecting pan according to some embodiments of the present disclosure, where the negative electrode collecting pan is in an unfolded state;
FIG. 6 is a top view of a negative electrode cover plate assembly and a negative electrode collecting pan according to some other embodiments of the present disclosure, where the negative electrode collecting pan is in an unfolded state;
FIG. 7 is a schematic diagram of an insulating separator according to some embodiments of the present disclosure;
FIG. 8 is a bottom view of a cover plate assembly and a collecting pan according to some embodiments of the present disclosure, where the collecting pan is in an unfolded state;
FIG. 9 is a schematic diagram of a positive electrode cover plate assembly and a positive electrode collecting pan according to some embodiments of the present disclosure, where the positive electrode collecting pan is in a folding state;
FIG. 10 is a schematic diagram of a positive electrode cover plate assembly and a positive electrode collecting pan according to some embodiments of the present disclosure, where the positive electrode collecting pan is in a folded state;
FIG. 11 is an exploded view of a battery cell according to some embodiments of the present disclosure;
FIG. 12 is a schematic diagram of an unfolded positive electrode collecting pan according to some embodiments of the present disclosure; and
FIG. 13 is a table of a minimum spacing between an explosion-proof valve and a peripheral wall of a cover plate body corresponding to deformation of the explosion-proof valve and initiation pressure of the explosion-proof valve according to some embodiments of the present disclosure.

In the drawings: 1000: battery cell; 100: positive electrode collecting pan; 101: negative electrode collecting pan; 110: first connection piece; 120: second connection piece; 121: connection region; 1211: opposite side walls; 1212: welding texture; 1213: welding spot; 122: identification region; 123: avoidance member; 130: intermediate member; 200: cover plate assembly; 210: cover plate body; 211: electrolyte solution filling channel; 212: second mounting hole; 213: first mounting hole; 214: first reinforcing rib; 250: terminal; 251: first limiting member; 252: second limiting member; 270: insulating separator; 271: avoidance hole; 272: communicating hole; 273: second reinforcing rib; 274: stop boss; 275: peripheral protrusion; 2751: avoidance port; 276: electrolyte solution filling port; 240: boss; 280: positive electrode cover plate assembly; 290: negative electrode cover plate assembly; 400: insulating member; 430: insulating piece; 440: sealing ring; 500: buffer member; 600: blocking member; 700: explosion-proof valve; 800: protection piece; 300: housing; and 320: electrode core.

### DETAILED DESCRIPTION

Embodiments of the present disclosure are described below in detail, and examples of the embodiments are shown in the drawings, throughout which identical or similar elements or elements with identical or similar functions are represented by identical or similar reference numerals. The embodiments described below with reference to the drawings are examples only for describing the present disclosure, and should not be construed as a limitation on the present disclosure.

A cover plate assembly 200 of a battery cell 1000 according to embodiments of the present disclosure is described below with reference to the drawings.

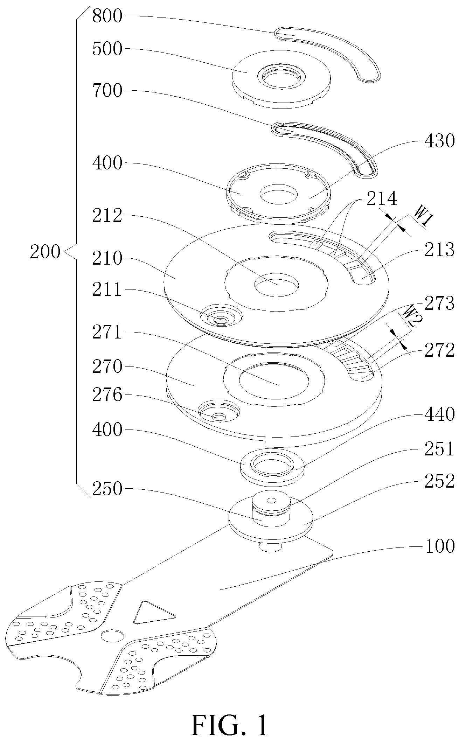

As shown in FIG. 1, a cover plate assembly 200 of a battery cell 1000 according to embodiments of the present disclosure includes a cover plate body 210 and an explosion-proof valve 700.

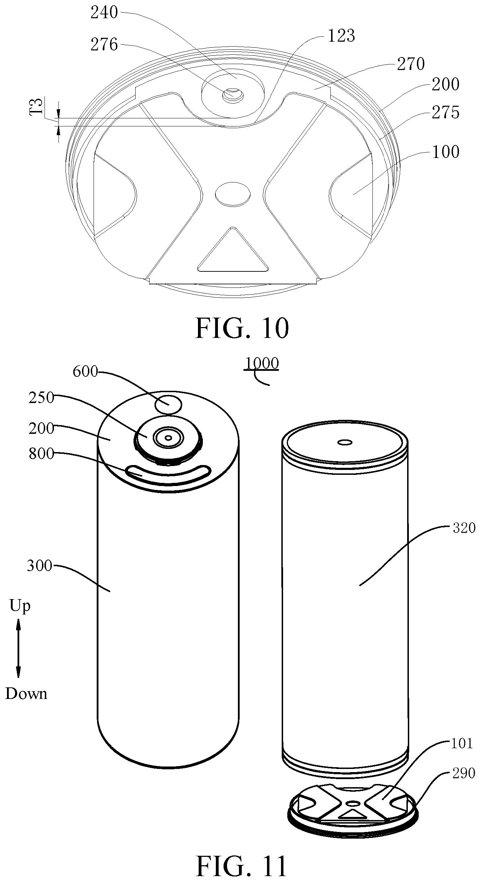

As shown in FIG. 1 and FIG. 11, a peripheral wall of the cover plate body 210 is adapted to connect to a housing 300 of the battery cell 1000, so that the cover plate body 210 can be used to block an opening of the housing 300, and difficulty of connecting the cover plate body 210 to the housing 300 is reduced.

As shown in FIG. 1, FIG. 2, and FIG. 3, the explosion-proof valve 700 is arranged on the cover plate body 210, and a minimum spacing between the explosion-proof valve 700 and the peripheral wall of the cover plate body 210 ranges from 0.5 mm to 3.05 mm. This means that the explosion-proof valve 700 is arranged on the cover plate body 210 and the explosion-proof valve 700 is arranged spaced away from the peripheral wall of the cover plate body 210, where multiple distances between the explosion-proof valve 700 and the peripheral wall of the cover plate body 210 are possible, and a minimum distance ranges from 0.5 mm to 3.05 mm.

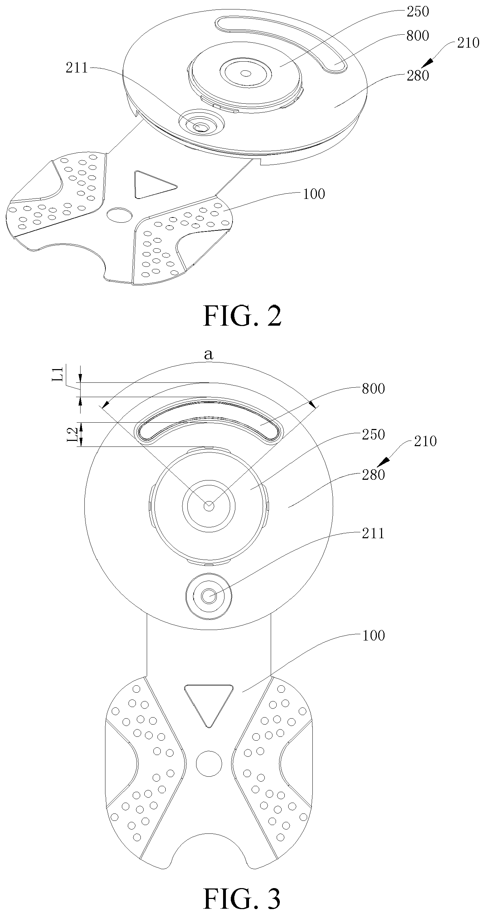

In some embodiments, the minimum spacing between the explosion-proof valve 700 and the peripheral wall of the cover plate body 210 is a minimum value of spacings between an outer edge of a peripheral wall, directly facing the cover plate body 210, of the explosion-proof valve 700 and a corresponding peripheral wall of the cover plate body 210, that is, L1 shown in FIG. 3.

It should be noted that the explosion-proof valve 700 is mainly configured to break when pressure in the battery cell 1000 is large, to discharge the pressure in the battery cell 1000 through the explosion-proof valve 700, so as to improve safety of using the battery cell 1000. The explosion-proof valve 700 is arranged on the cover plate body 210, so that the cover plate body 210 can be used to support the explosion-proof valve 700, to improve position stability of the explosion-proof valve 700. This helps ensure operation performance of the explosion-proof valve 700 and reduce difficulty of assembling the explosion-proof valve 700 and the cover plate body 210.

In some embodiments, the explosion-proof valve 700 is welded to the cover plate body 210, to fasten the explosion-proof valve 700 to the cover plate body 210 and ensure strength of a connection between the explosion-proof valve 700 and the cover plate body 210. In this way, the cover plate body 210 can be used to support the explosion-proof valve 700, to improve position stability of the explosion-proof valve 700.

It should be further noted that, during assembly of the battery cell 1000, the cover plate body 210 needs to be mounted on the housing 300 (as shown in FIG. 11), and the cover plate body 210 is welded to the housing 300. However, stress occurs during welding. In this case, the explosion-proof valve 700 arranged on the cover plate body 210 is subject to a tensile force toward a side of the housing 300. Consequently, the explosion-proof valve 700 is highly susceptible to deformation and cracking. This shortens service life of the explosion-proof valve 700 and affects operation performance of the explosion-proof valve 700.

Therefore, in the present disclosure, the explosion-proof valve 700 is arranged spaced away from the peripheral wall of the cover plate body 210, and the minimum spacing between the explosion-proof valve 700 and the peripheral wall of the cover plate body 210 is set to range from 0.5 mm to 3.05 mm, so that a specific distance can be kept between the explosion-proof valve 700 and the peripheral wall of the cover plate body 210.

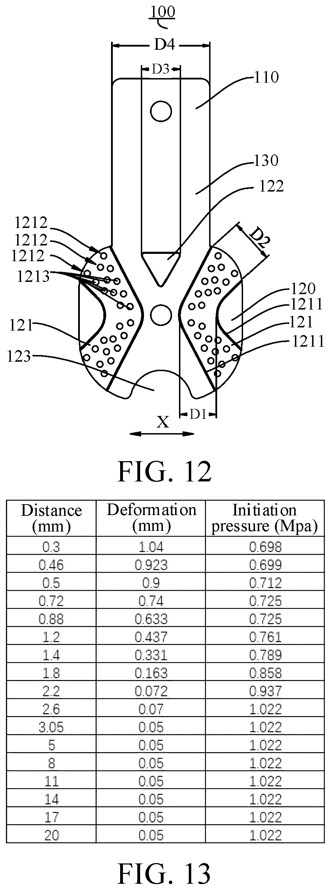

As shown in FIG. 13, when the minimum spacing between the explosion-proof valve 700 and the peripheral wall of the cover plate body 210 is less than 0.5 mm, an amount of deformation of the explosion-proof valve 700 increases. Consequently, the explosion-proof valve 700 is highly susceptible to deformation and cracking. This shortens service life of the explosion-proof valve 700 and affects operation performance of the explosion-proof valve 700. When the minimum spacing between the explosion-proof valve 700 and the peripheral wall of the cover plate body 210 is greater than 3.05 mm, impact on an amount of deformation and initiation pressure of the explosion-proof valve 700 is slight. However, because the explosion-proof valve 700 is arranged on the cover plate body 210, if the minimum spacing between the explosion-proof valve 700 and the peripheral wall of the cover plate body 210 is greater than 3.05 mm, the explosion-proof valve 700 is arranged near a center of the cover plate body 210. This is not conducive to arrangement of other mechanical parts (for example, a terminal 250 in the following descriptions) on the cover plate body 210. In addition, this is not conducive to arranging the explosion-proof valve 700 with a large extension length when the explosion-proof valve 700 needs to be arranged to extend along a circumferential direction of the cover plate body 210. This affects pressure relief performance of the explosion-proof valve 700.

Therefore, in the present disclosure, the minimum spacing between the explosion-proof valve 700 and the peripheral wall of the cover plate body 210 is set to range from 0.5 mm to 3.05 mm. This avoids impact on the explosion-proof valve 700 during welding between the cover plate body 210 and the housing 300 to some extent, so as to avoid deformation and cracking of the explosion-proof valve 700 and ensure operation performance of the explosion-proof valve 700. In addition, this can further facilitate arrangement of the terminal 250 on the cover plate body 210 and ensure an extension length of the explosion-proof valve 700.

In some embodiments, the explosion-proof valve 700 is made of aluminum, and the explosion-proof valve 700 may be molded through a stamping process. Alternatively, a laser score is provided on the explosion-proof valve 700 to ensure that the explosion-proof valve 700 can effectively break when pressure in the battery cell 1000 is large, so as to improve safety of using the battery cell 1000.

Certainly, in some other embodiments, the explosion-proof valve 700 may alternatively be made of steel or other materials.

It can be learned from the foregoing structure that, in the cover plate assembly 200 of the battery cell 1000 in the embodiments of the present disclosure, the explosion-proof valve 700 is arranged on the cover plate body 210, to reduce difficulty of mounting the explosion-proof valve 700 and ensure that pressure can be smoothly discharged when pressure in the battery cell 1000 is large, so as to improve safety of using the battery cell 1000.

In addition, the explosion-proof valve 700 is arranged, so that the minimum spacing between the explosion-proof valve 700 and the peripheral wall of the cover plate body 210 ranges from 0.5 mm to 3.05 mm. This can avoid impact on the explosion-proof valve 700 during welding between the cover plate body 210 and the housing 300 to some extent, so as to avoid deformation and cracking of the explosion-proof valve 700 to some extent and ensure operation performance of the explosion-proof valve 700.

It can be understood that, compared with the related art, in the present disclosure, the explosion-proof valve 700 is arranged on the cover plate body 210, and the minimum spacing between the explosion-proof valve 700 and the peripheral wall of the cover plate body 210 is limited, to avoid deformation and cracking of the explosion-proof valve 700 during assembly of the cover plate assembly 200 to some extent, so as to ensure operation performance of the explosion-proof valve 700 and extend service life of the explosion-proof valve 700.

In some embodiments, the minimum spacing between the explosion-proof valve 700 and the peripheral wall of the cover plate body 210 is 0.5 mm, 0.72 mm, 0.88 mm, 1 mm, 1.2 mm, 1.4 mm, 1.8 mm, 2.2 mm, 2.6 mm, 3.05 mm, or the like.

In some embodiments, as shown in FIG. 1, FIG. 2, and FIG. 3, the cover plate assembly 200 includes the terminal 250, the terminal 250 is arranged on the cover plate body 210, a peripheral wall of the terminal 250 is connected to the cover plate body 210, and a minimum spacing between the explosion-proof valve 700 and the peripheral wall of the terminal 250 ranges from 0.5 mm to 20 mm. This means that the terminal 250 is arranged on the cover plate body 210 and the explosion-proof valve 700 is arranged spaced away from the peripheral wall of the terminal 250, where multiple distances between the explosion-proof valve 700 and the peripheral wall of the terminal 250 are possible, and a minimum distance ranges from 0.5 mm to 20 mm.

In some embodiments, the minimum spacing between the explosion-proof valve 700 and the peripheral wall of the terminal 250 is a minimum value of spacings between an outer edge of a peripheral wall, directly facing the terminal 250, of the explosion-proof valve 700 and a corresponding peripheral wall of the terminal 250, that is, L2 shown in FIG. 3.

It should be noted that the terminal 250 is mainly configured to be electrically connected to an electrode core 320 of the battery cell 1000, to facilitate lead-out of a current of the electrode core 320 and ensure operation performance of the electrode core 320, in other words, ensure operation performance of the battery cell 1000. The terminal 250 is arranged on the cover plate body 210, so that the cover plate body 210 can be used to support the terminal 250, to improve position stability of the terminal 250. This helps ensure operation performance of the terminal 250 and reduce difficulty of assembling the terminal 250 and the cover plate body 210.

It should be further noted that, during assembly of the battery cell 1000, the terminal 250 needs to be mounted on the cover plate body 210 (as shown in FIG. 2 and FIG. 3), and the terminal 250 is welded to the cover plate body 210. However, stress also occurs during welding. Consequently, the explosion-proof valve 700 on the cover plate body 210 is subject to a tensile force toward a side of the terminal 250, and the explosion-proof valve 700 is highly susceptible to deformation and cracking. This shortens service life of the explosion-proof valve 700 and affects operation performance of the explosion-proof valve 700.

Therefore, in the present disclosure, the minimum spacing between the explosion-proof valve 700 and the peripheral wall of the terminal 250 is set to range from 0.5 mm to 20 mm, so that a specific distance can be kept between the explosion-proof valve 700 and the peripheral wall of the terminal 250. This avoids impact on the explosion-proof valve 700 during welding between the terminal 250 and the cover plate body 210, so as to avoid deformation and cracking of the explosion-proof valve 700 and further ensure operation performance of the explosion-proof valve 700.

In some embodiments, the minimum spacing between the explosion-proof valve 700 and the peripheral wall of the terminal 250 is 0.5 mm, 1 mm, 5 mm, 10 mm, 15 mm, 20 mm, or the like.

Optionally, as shown in FIG. 1, FIG. 2, and FIG. 3, the cover plate assembly 200 further includes a protection piece 800. The protection piece 800 is arranged on the cover plate body 210 and is located on an outer side of the explosion-proof valve 700. The protection piece 800 is configured to protect the explosion-proof valve 700 to avoid deformation and cracking of the explosion-proof valve 700 caused by an external foreign object falling onto the explosion-proof valve 700, so as to ensure operation performance of the explosion-proof valve 700.

In some embodiments, as shown in FIG. 1, FIG. 2, and FIG. 3, the explosion-proof valve 700 extends along the circumferential direction of the cover plate body 210, so that an extension area of the explosion-proof valve 700 can be ensured. This ensures an exhaust area of the cover plate body 210 when the explosion-proof valve 700 breaks, and ensures that a large amount of gas in the battery cell 1000 can be smoothly exhausted through the explosion-proof valve 700 when pressure in the battery cell 1000 is large, to improve safety of using the battery cell 1000.

In addition, the foregoing arrangement can further increase an initiation area of the explosion-proof valve 700, to avoid a phenomenon that a pressure relief area of the explosion-proof valve 700 cannot meet a designed value, and ensure stability of initiation pressure of the explosion-proof valve 700.

In some embodiments, as shown in FIG. 1, FIG. 2, and FIG. 3, the explosion-proof valve 700 is arranged at a peripheral of the terminal 250 and extends along the circumferential direction of the cover plate body 210. This ensures that both the terminal 250 and the explosion-proof valve 700 can be arranged on the cover plate body 210, and can further ensure an extension area of the explosion-proof valve 700, so as to ensure stability of initiation pressure of the explosion-proof valve 700.

In some embodiments, as shown in FIG. 1 and FIG. 3, the explosion-proof valve 700 is formed into a strip shape extending along the circumferential direction of the cover plate body 210, a connection line between one endpoint of the explosion-proof valve 700 and the center of the cover plate body 210 is a first connection line, a connection line between the other endpoint of the explosion-proof valve 700 and the center of the cover plate body 210 is a second connection line, and an included angle between the first connection line and the second connection line ranges from 10° to 225°. The included angle between the first connection line and the second connection line may be understood as a shown in FIG. 3. When the included angle between the first connection line and the second connection line is less than 10°, an extension area of the explosion-proof valve 700 is reduced. Consequently, an exhaust area of the cover plate body 210 is small. This is not conducive to exhaust and pressure relief, and affects safety of using the battery cell 1000. When the included angle between the first connection line and the second connection line is greater than 225°, difficulty of molding the explosion-proof valve 700 increases, and structural strength of the cover plate body 210 is reduced. Consequently, the explosion-proof valve 700 is highly susceptible to deformation. This further increases difficulty of welding the explosion-proof valve 700.

Therefore, in the present disclosure, the included angle between the first connection line and the second connection line is set to range from 10° to 225°. This ensures an extension area of the explosion-proof valve 700, and can further reduce difficulty of molding the explosion-proof valve 700 and improve structural strength of the cover plate body 210, so as to reduce difficulty of welding the explosion-proof valve 700 to the cover plate body 210. In this way, the explosion-proof valve 700 can be stably arranged on the cover plate body 210 to improve safety of using the battery cell 1000.

In some embodiments, the included angle between the first connection line and the second connection line is 10°, 50°, 100°, 150°, 200°, 225°, or the like.

In some embodiments, as shown in FIG. 1 and FIG. 3, the explosion-proof valve 700 is formed into an arc shape extending along the circumferential direction of the cover plate body 210, so that the shape of the explosion-proof valve 700 matches a shape of the cover plate body 210. In this way, the explosion-proof valve 700 extending along the circumferential direction of the cover plate body 210 has a sufficient extension area, thereby ensuring operation performance of the explosion-proof valve 700.

In some embodiments, a central angle of the arc-shaped explosion-proof valve 700 ranges from 10° to 225°, so that the included angle between the first connection line and the second connection line ranges from 10° to 225°.

In some other embodiments, a central angle of the arc-shaped explosion-proof valve 700 is 360°. To be specific, the central angle of the arc-shaped explosion-proof valve 700 is not limited to ranging from 10° to 225°, and the central angle of the arc-shaped explosion-proof valve 700 may alternatively be set to 360°. This can maximize an exhaust area of the cover plate body 210 when the arc-shaped explosion-proof valve 700 breaks.

In addition, when the central angle of the arc-shaped explosion-proof valve 700 is 360°, the arc-shaped explosion-proof valve 700 can be formed into a whole-circle structure along the circumferential direction of the cover plate body 210. This also helps reduce difficulty of molding the arc-shaped explosion-proof valve 700.

It should be noted that a circle center of the arc-shaped explosion-proof valve 700 may or may not coincide with the center of the cover plate body 210. This is not specifically limited in the present disclosure.

In some embodiments, the circle center of the arc-shaped explosion-proof valve 700 coincides with the center of the cover plate body 210. This helps ensure an extension length of the explosion-proof valve 700 and therefore ensure an area of the explosion-proof valve 700.

In some embodiments, multiple explosion-proof valves 700 are arranged on the cover plate body 210, the multiple explosion-proof valves 700 are arranged spaced away along the circumferential direction of the cover plate body 210, and at least one explosion-proof valve 700 extends along the circumferential direction of the cover plate body 210. This ensures an overall exhaust area of the cover plate body 210, and can further reduce an extension area of each explosion-proof valve 700, to reduce difficulty of connecting the explosion-proof valve 700 to the cover plate body 210 and ensure connection quality, so that the explosion-proof valve 700 can be stably arranged on the cover plate body 210.

To be specific, in the present disclosure, the multiple explosion-proof valves 700 are arranged on the cover plate body 210, and the multiple explosion-proof valves 700 together can ensure an exhaust area of the cover plate body 210, and can further ensure quality of a connection between the explosion-proof valves 700 and the cover plate body 210.

In the descriptions of the present disclosure, "multiple" means two or more, unless otherwise specified.

In some embodiments, two explosion-proof valves 700 are arranged on the cover plate body 210, the two explosion-proof valves 700 are arranged spaced away along the circumferential direction of the cover plate body 210 and extend along the circumferential direction of the cover plate body 210 to be formed into arc-shaped holes, and the two explosion-proof valves 700 are symmetrically arranged on the cover plate body 210. This ensures uniformity of exhaust, and can further ensure an exhaust area of the cover plate body 210, so as to help discharge pressure in the battery cell 1000 and improve safety of using the battery cell 1000.

It should be noted that, when multiple explosion-proof valves 700 are arranged on the cover plate body 210, multiple protection pieces 800 may be arranged on the cover plate body 210 correspondingly. Therefore, shapes and the number of protection pieces 800 shown in FIG. 2 to FIG. 6 may be understood as shapes and the number of explosion-proof valves 700.

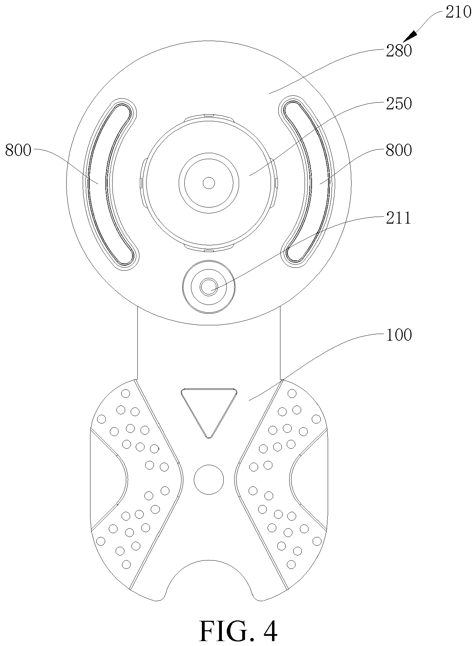

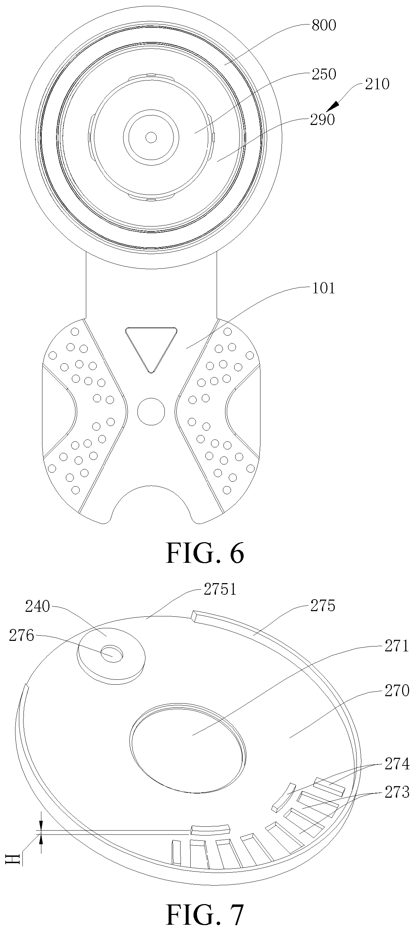

As shown in FIG. 2, FIG. 3, and FIG. 5, one explosion-proof valve 700 is arranged on the cover plate body 210. The explosion-proof valve 700 is arranged at the periphery of the terminal 250 and extends along the circumferential direction of the cover plate body 210, so that the explosion-proof valve 700 is formed into an arc-shaped hole, to ensure an extension area of the explosion-proof valve 700, increase an exhaust area of the cover plate body 210, and improve safety of using the battery cell 1000. As shown in FIG. 4, two explosion-proof valves 700 are arranged on the cover plate body 210. The two explosion-proof valves 700 are arranged spaced away along the circumferential direction of the cover plate body 210 and extend along the circumferential direction of the cover plate body 210 to be formed into arc-shaped holes, and the two explosion-proof valves 700 are symmetrically arranged relative to the terminal 250, to ensure uniformity of exhaust by the cover plate body 210, ensure an exhaust area of the cover plate body 210, and reduce difficulty of molding the explosion-proof valves 700. As shown in FIG. 6, one explosion-proof valve 700 is arranged on the cover plate body 210, and a central angle of the explosion-proof valve 700 is 360°, so that the explosion-proof valve 700 is formed into a whole-circle structure along the circumferential direction of the cover plate body 210, to maximize an exhaust area of the cover plate body 210 and reduce difficulty of molding the explosion-proof valve 700.

It should be further noted that all of FIG. 1 to FIG. 6 show that the explosion-proof valve 700 is an arc-shaped explosion-proof valve, and certainly, in some other embodiments, the explosion-proof valve 700 may alternatively be a circular explosion-proof valve, an elliptic explosion-proof valve, or the like.

In some embodiments, as shown in FIG. 1, a first mounting hole 213 is provided on the cover plate body 210, and the explosion-proof valve 700 is arranged in the first mounting hole 213, to arrange the explosion-proof valve 700 on the cover plate body 210 and reduce difficulty of connecting the explosion-proof valve 700 to the cover plate body 210.

In some embodiments, as shown in FIG. 1, the explosion-proof valve 700 is in an arc shape extending along the circumferential direction of the cover plate body 210, and a shape of the first mounting hole 213 matches the shape of the explosion-proof valve 700. To be specific, the first mounting hole 213 is an arc-shaped hole extending along the circumferential direction of the cover plate body 210. This helps arrange the explosion-proof valve 700 in the first mounting hole 213 and reduce difficulty of assembling the explosion-proof valve 700 and the first mounting hole 213.

In some embodiments, as shown in FIG. 1, the first mounting hole 213 is a racetrack-like arc-shaped hole extending along the circumferential direction of the cover plate body 210, to ensure a size of an opening of the first mounting hole 213. This ensures an area of the explosion-proof valve 700 arranged in the first mounting hole 213, ensures an exhaust area of the cover plate body 210 when the explosion-proof valve 700 breaks, and ensures that a large amount of gas in the battery cell 1000 can be smoothly exhausted through the explosion-proof valve 700 when pressure in the battery cell 1000 is large, to improve safety of using the battery cell 1000.

In some embodiments, as shown in FIG. 1, a second mounting hole 212 is provided on the cover plate body 210, and the terminal 250 is arranged in the second mounting hole 212, to arrange the terminal 250 on the cover plate body 210 and fasten the terminal 250 to the cover plate body 210. In this way, the cover plate body 210 can be used to support the terminal 250, to improve position stability of the terminal 250. This helps ensure operation performance of the terminal 250 and reduce difficulty of assembling the terminal 250 and the cover plate body 210.

In the descriptions of the present disclosure, a feature defined by "first" or "second" may explicitly or implicitly include one or more features. The terms are intended to distinguish between features without indicating an order or importance.

In some embodiments, as shown in FIG. 1, the terminal 250 has a first limiting member 251 located on one side of the cover plate body 210 and a second limiting member 252 located on the other side of the cover plate body 210, and the first limiting member 251 and the second limiting member 252 are arranged on two opposite sides of the cover plate body 210. In this way, when the terminal 250 is arranged in the second mounting hole 212, the terminal 250 may be fastened to the cover plate body 210 through matching between the first limiting member 251 and the second limiting member 252, so that the cover plate body 210 can be used to support the terminal 250, to improve position stability of the terminal 250. This also facilitates lead-out of a current of the electrode core 320 through the terminal 250.

In some embodiments, the terminal 250 is molded through heading, so that the first limiting member 251 and the second limiting member 252 of the terminal 250 can be arranged on two opposite sides of the cover plate body 210.

In some embodiments, the terminal 250 is made of an aluminum material, the aluminum material is connected to a collecting pan, and the collecting pan is adapted to connect to the electrode core 320, to implement an electrical connection between the terminal 250 and the electrode core 320. This facilitates lead-out of a current of the electrode core 320 through the terminal 250.

The collecting pan herein may be understood as a positive electrode collecting pan 100 in the following descriptions. For a specific structure of the positive electrode collecting pan 100, refer to FIG. 1.

In some embodiments, as shown in FIG. 1, at least one first reinforcing rib 214 is arranged in the first mounting hole 213. The first reinforcing rib 214 is configured to improve structural strength of the first mounting hole 213, to avoid deformation of the first mounting hole 213 due to a large extension area. This reduces difficulty of connecting the explosion-proof valve 700 to the first mounting hole 213, and can ensure quality of a connection between the explosion-proof valve 700 and the first mounting hole 213, to ensure that the explosion-proof valve 700 can be stably arranged in the first mounting hole 213 and improve position stability of the explosion-proof valve 700, so as to ensure operation performance of the explosion-proof valve 700.

Optionally, as shown in FIG. 1, multiple first reinforcing ribs 214 are arranged in the first mounting hole 213, and the multiple first reinforcing ribs 214 are arranged spaced away along an extension direction of the first mounting hole 213, to maximize structural strength of the first mounting hole 213 through matching between the multiple first reinforcing ribs 214 and avoid deformation of the first mounting hole 213.

In some embodiments, a width of the first reinforcing rib 214 ranges from 0.5 mm to 2.5 mm. The width of the first reinforcing rib 214 herein may be understood as W1 shown in FIG. 1. When the width of the first reinforcing rib 214 is less than 0.5 mm, difficulty of manufacturing the first reinforcing rib 214 increases, and reinforcing quality of the first reinforcing rib 214 is also degraded, leading to a risk of deformation of the first mounting hole 213. When the width of the first reinforcing rib 214 is greater than 2.5 mm, costs of manufacturing the first reinforcing rib 214 increase, and an exhaust area of the first mounting hole 213 may also be reduced, affecting pressure relief effect of the first mounting hole 213.

Therefore, in the present disclosure, the width of the first reinforcing rib 214 is set to range from 0.5 mm to 2.5 mm. This reduces difficulty of manufacturing the first reinforcing rib 214 and ensures reinforcing quality of the first reinforcing rib 214, and can further reduce costs of manufacturing the first reinforcing rib 214 and ensure an exhaust area of the first mounting hole 213, so as to improve pressure relief effect of the first mounting hole 213.

In some embodiments, the width of the first reinforcing rib 214 is 0.5 mm, 1.0 mm, 1.5 mm, 2 mm, 2.5 mm, or the like.

It should be noted that the first reinforcing rib 214 is not limited to a radial vertical bar shown in FIG. 1, but may be in any reinforcing rib shape. This is not specifically limited herein.

In some embodiments, as shown in FIG. 1, the cover plate assembly 200 further includes an insulating separator 270, the insulating separator 270 is arranged on one side of the cover plate body 210, and a communicating hole 272 that at least partially directly faces the first mounting hole 213 is provided on the insulating separator 270. The insulating separator 270 is arranged on one side of the cover plate body 210, so that the insulating separator 270 can be used to provide an insulation function for the terminal 250 and the cover plate body 210. In addition, the insulating separator 270 can be further used to protect the explosion-proof valve 700 to avoid damage caused by the electrode core 320 to the explosion-proof valve 700, so as to ensure performance of the explosion-proof valve 700.

In addition, the communicating hole 272 that at least partially directly faces the first mounting hole 213 is provided on the insulating separator 270, so that the insulating separator 270 can be prevented from hindering exhaust and pressure relief through the first mounting hole 213, to ensure operation performance of the battery cell 1000.

In some embodiments, as shown in FIG. 1, an avoidance hole 271 directly facing the second mounting hole 212 is further provided on the insulating separator 270, to prevent the insulating separator 270 from hindering mounting of the terminal 250 and reduce difficulty of mounting the terminal 250, so as to ensure assembly efficiency for the battery cell 1000.

In some embodiments, the insulating separator 270 is made of a polypropylene material and is arranged on the other side of the cover plate body 210, and a partial structure of the insulating separator 270 is located between the second limiting member 252 of the terminal 250 and the cover plate body 210 to implement insulation and matching between the terminal 250 and the cover plate body 210.

In some embodiments, as shown in FIG. 1, at least one second reinforcing rib 273 is arranged in the communicating hole 272. The second reinforcing rib 273 is configured to improve structural strength of the communicating hole 272, to avoid deformation of the communicating hole 272 due to a large extension area, so as to ensure structural strength of the insulating separator 270 and improve operation performance of the insulating separator 270. In addition, mechanical parts (for example, the positive electrode collecting pan 100 and a negative electrode collecting pan 101) located on one side of the insulating separator 270 can be further prevented from getting in contact with the explosion-proof valve 700 through the communicating hole 272 to cause damage to the explosion-proof valve 700. Further, this ensures that when gas in the battery cell 1000 is subject to thermal runway, the gas can effectively break through the explosion-proof valve 700, so that the explosion-proof valve 700 is smoothly opened, thereby improving safety of using the battery cell 1000.

Optionally, as shown in FIG. 1, multiple second reinforcing ribs 273 are arranged in the communicating hole 272, and the multiple second reinforcing ribs 273 are arranged spaced away along an extension direction of the communicating hole 272, to maximize structural strength of the communicating hole 272 through matching between the multiple second reinforcing ribs 273 and avoid deformation of the communicating hole 272. This also effectively prevents mechanical parts located on one side of the insulating separator 270 from getting in contact with the explosion-proof valve 700 through the communicating hole 272 to cause damage to the explosion-proof valve 700, and ensures operation performance of the explosion-proof valve 700.

In some embodiments, a width of the second reinforcing rib 273 ranges from 0.3 mm to 2 mm. The width of the second reinforcing rib 273 herein may be understood as W2 shown in FIG. 1. When the width of the second reinforcing rib 273 is less than 0.3 mm, difficulty of manufacturing the second reinforcing rib 273 increases, and reinforcing quality of the second reinforcing rib 273 is also degraded, leading to a risk that a mechanical part located on one side of the insulating separator 270 gets in contact with the explosion-proof valve 700 through the communicating hole 272 to cause damage to the explosion-proof valve 700. When the width of the second reinforcing rib 273 is greater than 2 mm, costs of manufacturing the second reinforcing rib 273 increase, and an exhaust area of the communicating hole 272 may also be reduced, affecting pressure relief effect of the communicating hole 272.

Therefore, in the present disclosure, the width of the second reinforcing rib 273 is set to range from 0.3 mm to 2 mm. This reduces difficulty of manufacturing the second reinforcing rib 273 and ensures reinforcing quality of the second reinforcing rib 273, and can further reduce costs of manufacturing the second reinforcing rib 273 and ensure an exhaust area of the communicating hole 272, so as to improve pressure relief effect of the communicating hole 272.

In some embodiments, the width of the second reinforcing rib 273 is 0.3 mm, 0.5 mm, 1.0 mm, 1.5 mm, 2 mm, or the like.

It should be noted that the second reinforcing rib 273 is not limited to a radial vertical bar shown in FIG. 1, but may be in any reinforcing rib shape. This is not specifically limited herein.

In some embodiments, as shown in FIG. 7, FIG. 8, and FIG. 9, a stop boss 274 is arranged on a first surface, away from the cover plate body 210, of the insulating separator 270, the stop boss 274 is arranged near the communicating hole 272, and the stop boss 274 is adapted to stop a collecting pan. This means that the insulating separator 270 has the first surface away from the cover plate body 210, the stop boss 274 is arranged on the first surface, and the stop boss 274 is arranged near the communicating hole 272. In this way, the stop boss 274 can be used to support a collecting pan (the positive electrode collecting pan 100 or the negative electrode collecting pan 101) located on a side of the first surface of the insulating separator 270, to prevent the collecting pan on the side of the first surface of the insulating separator 270 from blocking the communicating hole 272, and avoid a phenomenon that the communicating hole 272 is blocked and cannot perform exhaust or pressure relief. This ensures that when gas in the battery cell 1000 is subject to thermal runway, the gas can effectively break through the explosion-proof valve 700, so that the explosion-proof valve 700 is smoothly opened, thereby improving safety of using the battery cell 1000.

In some embodiments, a height of the stop boss 274 ranges from 0.5 mm to 2 mm. The height of the stop boss 274 herein may be understood as H shown in FIG. 7. When the height of the stop boss 274 is less than 0.5 mm, a phenomenon that the communicating hole 272 is blocked by the collecting pan located on the side of the first surface of the insulating separator 270 is likely to occur, affecting pressure relief effect of the communicating hole 272. When the height of the stop boss 274 is greater than 2 mm, costs of manufacturing the stop boss 274 increase, and a height of the battery cell 1000 also increases, making it more difficult to assemble the battery cell 1000.

Therefore, in the present disclosure, the height of the stop boss 274 is set to range from 0.5 mm to 2 mm. This prevents the collecting pan on the side of the first surface of the insulating separator 270 from blocking the communicating hole 272, and can further reduce costs of manufacturing the stop boss 274 and reduce the height of the battery cell 1000 to reduce difficulty of assembling the battery cell 1000.

In some embodiments, the height of the stop boss 274 is 0.5 mm, 1.0 mm, 1.5 mm, 2 mm, or the like.

Optionally, a side, away from the insulating separator 270, of the stop boss 274 has a stop surface, the stop surface stops the collecting pan, and an area S of the stop surface ≥ 1.5 mm². This may be understood as that the stop boss 274 has the stop surface away from the insulating separator 270, and the stop surface stops the collecting pan, so that the stop boss 274 can be matched with the collecting pan, and the stop boss 274 can be used to support the collecting pan to prevent the collecting pan from blocking the communicating hole 272.

In addition, the area S of the stop surface is set to be greater than or equal to 1.5 mm². This can ensure a contact area between the stop boss 274 and the collecting pan, and avoid damage to the collecting pan due to a small area of the stop surface of the stop boss 274, so as to ensure operation performance of the collecting pan.

In some embodiments, as shown in FIG. 7, FIG. 8, and FIG. 9, multiple stop bosses 274 are arranged spaced away, and a distance between two adjacent stop bosses 274 located on a same side of the communicating hole 272 is L, where 0 mm < L ≤ 6.5 mm. The multiple stop bosses 274 are arranged, so that mechanical parts located on the side of the first surface of the insulating separator 270 can be effectively supported, to prevent the mechanical parts located on the side of the first surface of the insulating separator 270 from blocking the communicating hole 272. The distance L between two adjacent stop bosses 274 located on a same side of the communicating hole 272 is set to be greater than 0 mm and less than or equal to 6.5 mm. This ensures that a larger number of stop bosses 274 can be arranged at a position near the communicating hole 272, and can further enable an exhaust channel to be formed between two adjacent stop bosses 274 located on a same side of the communicating hole 272. Therefore, it is ensured that when gas in the battery cell 1000 is subject to thermal runway, the gas can effectively break through the explosion-proof valve 700, so that the explosion-proof valve 700 is smoothly opened, thereby improving safety of using the battery cell 1000.

In some embodiments, the distance between two adjacent stop bosses 274 located on a same side of the communicating hole 272 is 1 mm, 2 mm, 3 mm, 4 mm, 5 mm, 6 mm, 6.5 mm, or the like.

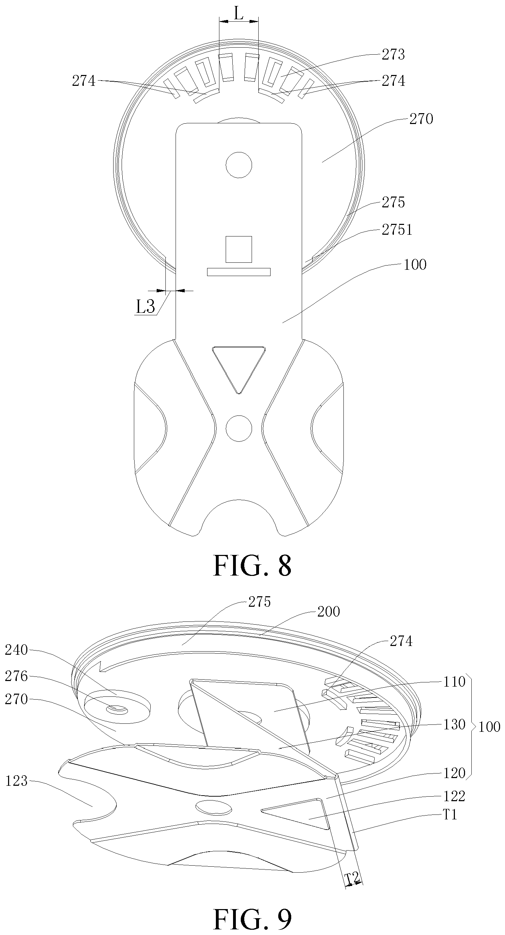

In some embodiments, as shown in FIG. 7, FIG. 8, FIG. 9, and FIG. 10, a peripheral protrusion 275 is arranged at a periphery of a first surface, away from the cover plate body 210, of the insulating separator 270, and an avoidance port 2751 for avoiding a collecting pan is provided on the peripheral protrusion 275. The peripheral protrusion 275 is arranged, so that the collecting pan can be prevented from extending out of the insulating separator 270 along a radial direction of the insulating separator 270 after being folded, to avoid an electrical connection between the collecting pan and other mechanical parts (for example, the housing 300) and ensure operation performance of the battery cell 1000. The avoidance port 2751 for avoiding the collecting pan is provided on the peripheral protrusion 275 to ensure that the unfolded collecting pan can be mounted on the cover plate body 210 (as shown in FIG. 8), so as to reduce difficulty of assembling the collecting pan.

In addition, the avoidance port 2751 can further prevent the peripheral protrusion 275 from causing damage to the collecting pan, to extend service life of the collecting pan.

In some embodiments, a minimum spacing between a side wall of the avoidance port 2751 and the collecting pan ranges from 0.5 mm to 5 mm. The minimum spacing between the side wall of the avoidance port 2751 and the collecting pan herein may be understood as L3 shown in FIG. 8. When the minimum spacing between the side wall of the avoidance port 2751 and the collecting pan is less than 0.5 mm, a risk that the peripheral protrusion 275 causes damage to the collecting pan occurs, shortening service life of the collecting pan. When the minimum spacing between the side wall of the avoidance port 2751 and the collecting pan is greater than 5 mm, the peripheral protrusion 275 cannot effectively limit the collecting pan. Consequently, the collecting pan is likely to extend out of the insulating separator 270 along the radial direction of the insulating separator 270 after being folded, degrading operation performance of the battery cell 1000.

Therefore, in the present disclosure, the minimum spacing between the side wall of the avoidance port 2751 and the collecting pan is set to range from 0.5 mm to 5 mm. This prevents the peripheral protrusion 275 from causing damage to the collecting pan, and can further prevent the collecting pan from extending out of the insulating separator 270 along the radial direction of the insulating separator 270 after being folded.

In some embodiments, the minimum spacing between the side wall of the avoidance port 2751 and the collecting pan is 0.5 mm, 1 mm, 2 mm, 3 mm, 4 mm, 5 mm, or the like.

In some embodiments, as shown in FIG. 1, the cover plate assembly 200 further includes an insulating member 400. The insulating member 400 is arranged in the second mounting hole 212 and is located between the terminal 250 and the cover plate body 210, so that the cover plate body 210 is insulated and spaced away from the terminal 250. This avoids an electrical connection between the cover plate body 210 and the terminal 250, to ensure operation performance of the battery cell 1000.

In some embodiments, as shown in FIG. 1, the insulating member 400 includes an insulating piece 430 and a sealing ring 440. The insulating piece 430 is arranged on one side of the cover plate body 210, and a partial structure of the insulating piece 430 extends into the second mounting hole 212. The sealing ring 440 is arranged on the other side of the cover plate body 210, and a partial structure of the sealing ring 440 extends into the second mounting hole 212. In this way, the insulating member 400 is arranged in the second mounting hole 212 and is located between the terminal 250 and the cover plate body 210, so that the cover plate body 210 is insulated and spaced away from the terminal 250, and difficulty of mounting the insulating member 400 and the cover plate body 210 is reduced.

In some embodiments, the insulating piece 430 is arranged on an outer side of the cover plate body 210, and the sealing ring 440 is arranged on an inner side of the cover plate body 210. The insulating piece 430 is obtained through injection molding by using high-performance thermoplastic resin, for example, polyphenylene sulfide, to ensure insulation performance of the insulating piece 430, so that the cover plate body 210 can be effectively insulated and spaced away from the terminal 250. The sealing ring 440 is made of fluorine rubber, ethylene propylene diene monomer, or meltable polytetrafluoroethylene. This ensures insulation performance of the sealing ring 440, and can further enable the sealing ring 440 to have specific sealing performance, to provide a sealing function for the terminal 250 and avoid overflow of an electrolyte solution in the battery cell 1000.

In some embodiments, as shown in FIG. 1, the cover plate assembly 200 further includes a buffer member 500. The buffer member 500 is arranged between the insulating member 400 and the first limiting member 251, to prevent the first limiting member 251 from causing damage to the insulating member 400 during molding, extend service life of the insulating member 400, and ensure insulation performance of the insulating member 400.

In addition, during molding of the first limiting member 251, the buffer member 500 can be further used to limit and support the first limiting member 251, to improve structural strength of the first limiting member 251 after molding and ensure position stability of the first limiting member 251, so as to improve position stability of the terminal 250 and ensure performance of the terminal 250.

In some embodiments, the buffer member 500 is obtained by molding an aluminum material through stamping. This reduces difficulty of molding the buffer member 500, and can further enable the buffer member 500 to have specific structural strength. In this way, the buffer member 500 can be used to limit and support the first limiting member 251, to improve structural strength of the first limiting member 251 after molding, prevent the first limiting member 251 from causing damage to the insulating member 400 during molding, and extend service life of the insulating member 400.

It should be noted that the foregoing aluminum material may be series 1 aluminum or aluminum of other series. This is not specifically limited herein.

A battery cell 1000 according to embodiments of the present disclosure is described below with reference to the drawings.

As shown in FIG. 1, FIG. 2, and FIG. 11, a battery cell 1000 according to embodiments of the present disclosure includes a housing 300 and a cover plate body 210.

The cover plate body 210 is arranged in the housing 300. The cover plate body 210 is the foregoing cover plate assembly 200. A specific structure of the cover plate assembly 200 is not described in detail herein.

It can be learned from the foregoing structure that, in the battery cell 1000 according to the embodiments of the present disclosure, the foregoing cover plate assembly 200 is used, so that operation performance of an explosion-proof valve 700 can be effectively ensured, to improve operation performance of the battery cell 1000 and ensure safety of using the battery cell 1000.

In some embodiments, the explosion-proof valve 700 is in an arc shape extending along a circumferential direction of the cover plate body 210, and a circle center of the explosion-proof valve 700 coincides with a geometric center of the battery cell 1000. This means that the circle center of the explosion-proof valve 700 coincides with the geometric center of the battery cell 1000 when the explosion-proof valve 700 is formed into the arc shape extending along the circumferential direction of the cover plate body 210, to ensure an extension length of the explosion-proof valve 700 extending along the circumferential direction of the cover plate body 210, and therefore ensure an area of the explosion-proof valve 700.

In some embodiments, as shown in FIG. 11, the battery cell 1000 is a cylindrical battery, so that the battery cell 1000 has a high capacity, long cycle life, a wide range of applicable ambient temperature, and other advantages, to ensure operation performance of the battery cell 1000.

It should be noted that the circle center of the explosion-proof valve 700 coincides with a circle center of the battery cell 1000 when the battery cell 1000 is a cylindrical battery.

In some embodiments, as shown in FIG. 11, the battery cell 1000 further includes an electrode core 320, an accommodating cavity is formed in the housing 300, and the electrode core 320 is arranged in the accommodating cavity and has a positive electrode tab and a negative electrode tab. The electrode core 320 is arranged in the accommodating cavity, so that the electrode core 320 can be arranged in the housing 300, and the housing 300 can be used to protect the electrode core 320, to extend service life of the electrode core 320 and improve safety of using the electrode core 320. The positive electrode tab and the negative electrode tab are arranged on the electrode core 320, to facilitate lead-out of a current of the electrode core 320 through matching between the positive electrode tab and the negative electrode tab, and ensure operation performance of the electrode core 320.

In some embodiments, as shown in FIG. 1, FIG. 2, and FIG. 11, the battery cell 1000 includes a positive electrode cover plate assembly 280 and a negative electrode cover plate assembly 290. The positive electrode cover plate assembly 280 is arranged in the housing 300 and is electrically connected to the positive electrode tab through a positive electrode collecting pan 100. The negative electrode cover plate assembly 290 is arranged in the housing 300 and is electrically connected to the negative electrode tab through a negative electrode collecting pan 101. The positive electrode cover plate assembly 280 and/or the negative electrode cover plate assembly 290 are the foregoing cover plate assembly 200. This means that the battery cell 1000 further includes the positive electrode collecting pan 100 and the negative electrode collecting pan 101, the positive electrode cover plate assembly 280 is electrically connected to the positive electrode tab through the positive electrode collecting pan 100 to implement an electrical connection between the positive electrode cover plate assembly 280 and the electrode core 320, and the negative electrode cover plate assembly 290 is electrically connected to the negative electrode tab through the negative electrode collecting pan 101 to implement an electrical connection between the negative electrode cover plate assembly 290 and the electrode core 320. This facilitates lead-out of a current of the electrode core 320 through matching between the positive electrode cover plate assembly 280 and the negative electrode cover plate assembly 290, to ensure operation performance of the electrode core 320, in other words, ensure operation performance of the battery cell 1000.

In some embodiments, the positive electrode collecting pan 100 is connected to the positive electrode tab of the electrode core 320 and the terminal 250 on the positive electrode cover plate assembly 280 separately through penetration welding, so that an electrical connection can be formed between the electrode core 320 and the terminal 250. This can further ensure strength of a connection between the positive electrode collecting pan 100 and each of the electrode core 320 and the positive electrode cover plate assembly 280, reduce difficulty of connecting the positive electrode collecting pan 100 to each of the electrode core 320 and the positive electrode cover plate assembly 280, and improve assembly efficiency and structural stability for the battery cell 1000.

Correspondingly, the negative electrode collecting pan 101 is connected to the negative electrode tab of the electrode core 320 and the negative electrode cover plate assembly 290 separately through penetration welding.

In some embodiments, both the positive electrode cover plate assembly 280 and the negative electrode cover plate assembly 290 are the foregoing cover plate assembly 200, to increase an initiation area of the explosion-proof valve 700 and improve safety of using the battery cell 1000. This can further make structures of the positive electrode cover plate assembly 280 and the negative electrode cover plate assembly 290 consistent, to facilitate processing with a unified mold and reduce difficulty of molding the positive electrode cover plate assembly 280 and the negative electrode cover plate assembly 290.

In some embodiments, the housing 300 is molded through stamping or welding, and the housing 300 is made of an aluminum material, a steel material, or the like.

In some embodiments, the positive electrode collecting pan 100 is made of an aluminum material, and the negative electrode collecting pan 101 is made of a copper material.

Certainly, in some other embodiments, a material of the negative electrode collecting pan 101 is not limited to copper, and may alternatively be steel. When the battery cell 1000 is a sodium-ion battery, the negative electrode collecting pan 101 may alternatively be made of an aluminum material. This is not specifically limited herein.

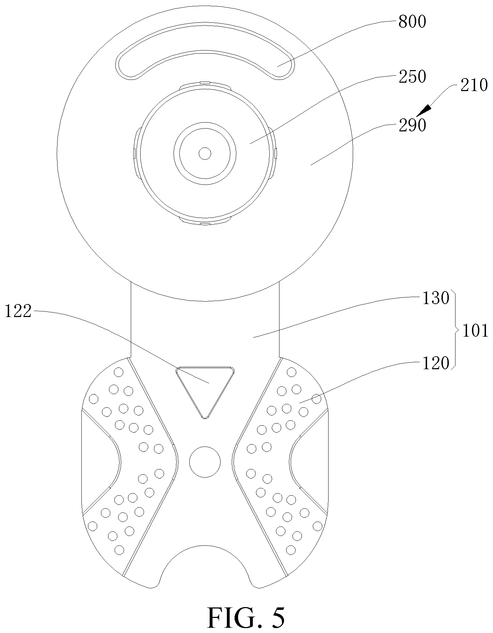

In some embodiments, structures of the positive electrode collecting pan 100 and the negative electrode collecting pan 101 are consistent. As shown in FIG. 5 and FIG. 9, the positive electrode collecting pan 100 and the negative electrode collecting pan 101 each include a first connection piece 110, an intermediate member 130, and a second connection piece 120. The first connection piece 110, the intermediate member 130, and the second connection piece 120 are stacked along an axial direction of the electrode core 320. The first connection piece 110 is electrically connected to the cover plate assembly 200, and the second connection piece 120 is electrically connected to the electrode core 320. The axial direction of the electrode core 320 herein may also be understood as an up-down direction shown in FIG. 11. The first connection piece 110, the intermediate member 130, and the second connection piece 120 are stacked along the axial direction of the electrode core 320, so that the collecting pan can be used to connect two mechanical parts (for example, the cover plate assembly 200 and the electrode core 320) arranged along the up-down direction, to reduce difficulty of connecting the cover plate assembly 200 and the electrode core 320 that are arranged spaced away along the up-down direction. This implements an electrical connection between the electrode core 320 and the cover plate assembly 200, to facilitate lead-out of a current of the electrode core 320 through the cover plate assembly 200 and ensure operation performance of the electrode core 320, in other words, ensure operation performance of the battery cell 1000.

In addition, the first connection piece 110, the intermediate member 130, and the second connection piece 120 are stacked along the axial direction of the electrode core 320, so that a size of the collecting pan (the positive electrode collecting pan 100 and the negative electrode collecting pan 101) along a thickness direction can be further reduced, to reduce a size of the battery cell 1000 along an axial direction and reduce difficulty of assembling the battery cell 1000.

It should be noted that the positive electrode collecting pan 100 and the negative electrode collecting pan 101 are collectively referred to as the collecting pan below for ease of description.

In some embodiments, during processing of the collecting pan, the collecting pan is first formed into a shape shown in FIG. 12, and then the collecting pan is folded (as shown in FIG. 9) after the processing of the collecting pan is completed, so that the first connection piece 110, the intermediate member 130, and the second connection piece 120 of the collecting pan are stacked along the axial direction of the electrode core 320, and an electrical connection between the cover plate assembly 200 and the electrode core 320 can be implemented through the collecting pan. This reduces difficulty of connecting the cover plate assembly 200 and the electrode core 320, reduces space occupied by the collecting pan, and reduces difficulty of molding the collecting pan.

In some embodiments, as shown in FIG. 9, the second connection piece 120 further includes an identification region 122, and the identification region 122 is provided near a joint between the intermediate member 130 and the second connection piece 120. To be specific, the identification region 122 is provided near the joint between the intermediate member 130 and the second connection piece 120, and the identification region 122 helps an operator quickly determine a position of the joint between the intermediate member 130 and the second connection piece 120, to facilitate folding of the collecting pan from the shape shown in FIG. 12 to a shape shown in FIG. 9. This reduces difficulty of molding the collecting pan and ensures accuracy of a structure of the collecting pan after molding, to avoid reducing an area of the second connection piece 120, so as to ensure a connection area between the collecting pan and the electrode core 320 and improve operation performance of the battery cell 1000.

To be specific, in the present disclosure, the identification region 122 is provided, so that difficulty of molding the collecting pan can be reduced, and a position at which the collecting pan is to be folded can be further limited to ensure a connection area between the second connection piece 120 and the electrode core 320.

In some embodiments, as shown in FIG. 9, a connection line between joints that are between two opposite side walls of the intermediate member 130 and the second connection piece 120 is a first connection line T1, and a minimum distance between the identification region 122 and the first connection line T1 ranges from -2 mm to +2 mm. This may also be understood as that a connection line between the intermediate member 130 and the second connection piece 120 is the first connection line T1, multiple distances between the identification region 122 and the first connection line T1 are possible, and the minimum distance ranges from -2 mm to +2 mm, where the minimum distance between the identification region 122 and the first connection line T1 may also be understood as T2 shown in FIG. 9.

It should be noted that, when the minimum distance between the identification region 122 and the first connection line T1 is less than -2 mm, an area of the second connection piece 120 is reduced, and consequently, a connection area between the second connection piece 120 and the electrode core 320 is reduced; or when the minimum distance between the identification region 122 and the first connection line T1 is greater than 2 mm, an area of the intermediate member 130 is reduced, structural strength of the intermediate member 130 is reduced, and further, the first connection piece 110, the intermediate member 130, and the second connection piece 120 cannot be stacked along the axial direction of the electrode core 320, affecting performance of the collecting pan.

Therefore, in the present disclosure, the minimum distance between the identification region 122 and the first connection line T1 is set to range from -2 mm to +2 mm. This ensures a connection area between the second connection piece 120 and the electrode core 320, and can further ensure an area of the intermediate member 130, so that the first connection piece 110, the intermediate member 130, and the second connection piece 120 can be effectively stacked along the axial direction of the electrode core 320 to ensure performance of the collecting pan.

In a specific example, the minimum distance between the identification region 122 and the first connection line T1 is -2 mm, -1 mm, 0 mm, 1 mm, or 2 mm.

Optionally, as shown in FIG. 12, a maximum width of the identification region 122 is D3, and a minimum width of the intermediate member 130 is D4, where 0.2 < D3/D4 < 1. To be specific, the maximum width of the identification region 122 is less than the minimum width of the intermediate member 130, and a ratio of the maximum width of the identification region 122 to the minimum width of the intermediate member 130 is greater than 0.2. This avoids reducing structural strength of the collecting pan due to the arrangement of the identification region 122, and can further ensure that the identification region 122 has a specific width, so that the identification region 122 can be used to limit a position at which the collecting pan is to be folded, to reduce difficulty of molding the collecting pan.

In some embodiments, the ratio of the maximum width of the identification region 122 to the minimum width of the intermediate member 130 is 0.3, 0.4, 0.5, 0.6, 0.7, 0.8, 0.9, or the like.

In some embodiments, as shown in FIG. 8 and FIG. 9, the identification region 122 is a through-hole passing through the second connection piece 120 or a groove provided on the second connection piece 120. To be specific, the identification region 122 may be formed into a through-hole passing through the second connection piece 120, or may be formed into a groove provided on the second connection piece 120. This is not specifically limited herein, provided that an operator can directly observe a position of the identification region 122 to determine, based on the identification region 122, a position at which the collecting pan is to be folded.

The figure shows the identification region 122 in a triangular shape. However, in some other embodiments, the identification region 122 may alternatively be in a rectangular shape, a circular shape, an elliptic shape, an irregular pattern, or the like.

In some embodiments, as shown in FIG. 12, the second connection piece 120 includes a connection region 121 adapted to electrically connect to the electrode core 320. The connection region 121 includes opposite side walls 1211 that are provided spaced away along a first direction. A distance between the opposite side walls 1211 is a width of the connection region 121. A width of a part of the connection region 121 that is near an edge of the collecting pan is greater than a width of a part of the connection region 121 that is near a geometric center of the collecting pan. The first direction is set to be perpendicular to a thickness direction of the collecting pan. The first direction herein may also be understood as an X direction shown in FIG. 12, and the geometric center of the collecting pan may be understood as a position near a radial center of the collecting pan. To be specific, along the X direction, the connection region 121 has the opposite side walls 1211 that are provided spaced away, the distance between the opposite side walls 1211 is defined as the width of the connection region 121, and the width of the part of the connection region 121 that is near the edge of the collecting pan is set to be greater than the width of the part of the connection region 121 that is near the geometric center of the collecting pan, so that the width of the part of the connection region 121 that is near the edge of the collecting pan is larger, to increase a connection area between the connection region 121 and an outer electrode plate of the electrode core 320. This ensures the connection area between the collecting pan and the outer electrode plate of the electrode core 320, improves strength of a connection between the collecting pan and the electrode core 320, and reduces connection impedance, thereby helping improve operation performance of the battery cell 1000.

In addition, the connection region 121 electrically connected to the electrode core 320 is provided on the second connection piece 120, so that an electrical connection between the second connection piece 120 and the electrode core 320 can be implemented, in other words, an electrical connection between the collecting pan and the electrode core 320 is implemented. Because the second connection piece 120 is connected to the first connection piece 110, an electrical connection between the electrode core 320 and the cover plate assembly 200 can be implemented after the second connection piece 120 is connected to the electrode core 320. This facilitates lead-out of a current of the electrode core 320 through the cover plate assembly 200, to ensure operation performance of the electrode core 320, in other words, ensure operation performance of the battery cell 1000.

It should be noted that, in the related art, especially for a cylindrical electrode core, a circumference of the outer electrode plate of the electrode core 320 also increases correspondingly with an increase of a diameter of the electrode core 320. When the width of the part of the connection region 121 that is near the edge of the collecting pan is set to be consistent with the width of the part of the connection region 121 that is near the geometric center of the collecting pan, a connection area between the outer electrode plate and the collecting pan is small, leading to low strength of a connection between the outer electrode plate and the collecting pan and an increase of impedance. However, in the present disclosure, the width of the part of the connection region 121 that is near the edge of the collecting pan is set to be greater than the width of the part of the connection region 121 that is near the geometric center of the collecting pan. This can effectively resolve a technical problem that a connection area between the outer electrode plate and the collecting pan is small, to improve strength of a connection between the collecting pan and the electrode core 320, and reduce connection impedance.

In some embodiments, a pit may be formed on the second connection piece 120 through stamping, to form the connection region 121 on the second connection piece 120. In this way, the connection region 121 is molded through stamping, to reduce difficulty of molding the connection region 121 and ensure structural strength of the connection region 121. In addition, this further facilitates an electrical connection between the second connection piece 120 and the electrode core 320.

In some embodiments, the pit protrudes toward the electrode core 320, so thin the connection region 121 protrudes toward the electrode core 320. This facilitates an electrical connection between the connection region 121 and the electrode core 320, and can ensure yield of a connection between the connection region 121 and the electrode core 320.

In some embodiments, a difference between a minimum width of the connection region 121 and a maximum width of the connection region 121 ranges from 2 mm to 6 mm. Herein, the minimum width of the connection region 121 may be understood as D1 shown in FIG. 12, and the maximum width of the connection region 121 may be understood as D2 shown in FIG. 12. When the difference between the minimum width of the connection region 121 and the maximum width of the connection region 121 is less than 2 mm, under the premise that the minimum width of the connection region 121 is fixed, a connection area between the connection region 121 and the outer electrode plate of the electrode core 320 cannot be effectively increased. When the difference between the minimum width of the connection region 121 and the maximum width of the connection region 121 is greater than 6 mm, under the premise that the minimum width of the connection region 121 is fixed, the maximum width of the connection region 121 is large, and consequently, a connection area between the first connection piece 110 and the second connection piece 120 is reduced.

Therefore, in the present disclosure, the difference between the minimum width of the connection region 121 and the maximum width of the connection region 121 is set to range from 2 mm to 6 mm. This ensures a connection area between the connection region 121 and the outer electrode plate of the electrode core 320, and can further ensure a connection area between the connection region 121 and an inner electrode plate of the electrode core 320, to ensure a connection area between the collecting pan and the electrode core 320, improve strength of a connection between the collecting pan and the electrode core 320, and further reduce connection impedance.

In a specific example, the difference between the minimum width of the connection region 121 and the maximum width of the connection region 121 is 2 mm, 3 mm, 4 mm, 5 mm, 6 mm, or the like.

In some embodiments, the minimum width of the connection region 121 ranges from 1 mm to 10 mm. In other words, D1 ranges from 1 mm to 10 mm. When D1 < 1 mm, difficulty of molding the connection region 121 increases, and a connection area between the connection region 121 and the inner electrode plate of the electrode core 320 may also be reduced. When D1 > 10 mm, because the difference between the minimum width of the connection region 121 and the maximum width of the connection region 121 ranges from 2 mm to 6 mm, the maximum width D2 of the connection region 121 is large, and consequently, a connection area between the first connection piece 110 and the second connection piece 120 is reduced.

Therefore, in the present disclosure, the minimum width of the connection region 121 is set to range from 1 mm to 10 mm. This reduces difficulty of molding the connection region 121 and increases a connection area between the connection region 121 and the inner electrode plate of the electrode core 320, and can further ensure a connection area between the first connection piece 110 and the second connection piece 120 and ensure operation performance of the battery cell 1000.

In a specific example, the minimum width of the connection region 121 is 1 mm, 2 mm, 3 mm, 4 mm, 5 mm, 6 mm, 7 mm, 8 mm, 9 mm, or 10 mm.

In some embodiments, as shown in FIG. 12, the second connection piece 120 includes two connection regions 121, and the two connection regions 121 are symmetrically arranged relative to the geometric center of the collecting pan. This ensures a connection area between the second connection piece 120 and the electrode core 320, and can further simplify a structure of the collecting pan, reduce difficulty of manufacturing the collecting pan, and make connection points between the collecting pan and the electrode core 320 evenly distributed on the electrode core 320.

In some embodiments, as shown in FIG. 12, the connection region 121 is welded to the electrode core 320, and a welding texture 1212 is provided in the connection region 121. This may also be understood as that the welding texture 1212 is formed in the connection region 121 after welding between the connection region 121 and the electrode core 320 is completed. The welding implements an electrical connection between the connection region 121 and the electrode core 320, and can further ensure strength of a connection between the connection region 121 and the electrode core 320, so that relative positions of the connection region 121 and the electrode core 320 are stable, to ensure operation performance of the battery cell 1000.

In some embodiments, the connection region 121 is welded to the electrode core 320 through impulse spot welding.

When the connection region 121 is welded to the electrode core 320 through impulse spot welding, as shown in FIG. 12, the welding texture 1212 includes multiple welding spots 1213, and the multiple welding spots 1213 together implement fastening between the connection region 121 and the electrode core 320.

In some other embodiments, the connection region 121 is welded to the electrode core 320 through a laser ray. When the connection region 121 is welded to the electrode core 320 through a laser ray, the welding texture 1212 is formed into a welding line (not shown in the figure).

In some embodiments, as shown in FIG. 12, multiple rows of welding textures 1212 are provided in the connection region 121 along the first direction, each row of welding texture 1212 includes multiple welding spots 1213, and welding spots 1213 in adjacent rows are staggered. The multiple rows of welding textures 1212 are provided in the connection region 121 to increase a connection area between the connection region 121 and the electrode core 320, so as to improve strength of a connection between the connection region 121 and the electrode core 320, and ensure effect of the connection between the connection region 121 and the electrode core 320. Welding spots 1213 in adjacent rows are staggered to avoid interference between the welding spots 1213 in adjacent rows, so as to reduce thermal effect between the welding spots 1213 and improve welding yield. In addition, this can further make the multiple welding spots 1213 distributed more evenly, to reduce impedance.

It should be noted that the staggered arrangement of welding spots 1213 in adjacent rows may also be understood as follows: Along a width direction of the connection region 121, a welding spot 1213 in one of two adjacent rows of welding textures 1212 directly faces a position between two welding spots 1213 in the other row of welding texture 1212, to avoid interference between welding spots 1213 in adjacent rows during welding, reduce thermal effect between welding spots 1213, and improve welding yield.

Certainly, in some other embodiments, under the premise that a width of the connection region 121 is sufficiently large, welding spots 1213 in adjacent rows may alternatively be provided directly facing each other along the width direction of the connection region 121.

In some embodiments, as shown in FIG. 12, the number of welding textures 1212 near the edge of the collecting pan is greater than the number of welding textures 1212 near the geometric center of the collecting pan. To be specific, the number of welding textures 1212 near the edge of the collecting pan is greater than the number of welding textures 1212 near the geometric center of the collecting pan, to effectively increase a connection area between the connection region 121 and the outer electrode plate of the electrode core 320, improve strength of a connection between the collecting pan and the electrode core 320, and reduce connection impedance.

It should be noted that FIG. 12 shows an example in which three rows of welding textures 1212 are provided near the edge of the collecting pan and two rows of welding textures 1212 are provided near the geometric center of the collecting pan for description. However, in some other embodiments, alternatively, four rows of welding textures 1212 may be provided near the edge of the collecting pan, and three rows of welding textures 1212 may be provided near the geometric center of the collecting pan; or four rows of welding textures 1212 are provided near the edge of the collecting pan, and two rows of welding textures 1212 are provided near the geometric center of the collecting pan. This is not specifically limited herein, provided that the number of welding textures 1212 near the edge of the collecting pan is greater than the number of welding textures 1212 near the geometric center of the collecting pan.

In some embodiments, as shown in FIG. 1, an electrolyte solution filling channel 211 is provided on the cover plate body 210, and an electrolyte solution filling port 276 directly facing the electrolyte solution filling channel 211 is provided on the insulating separator 270. The electrolyte solution filling channel 211 and the electrolyte solution filling port 276 together can implement electrolyte solution filling toward the electrode core 320 to ensure operation performance of the electrode core 320.

In some embodiments, the electrolyte solution filling channel 211 has an inlet and an outlet, and the inlet and the outlet each are provided with a blocking member 600. In this way, the electrolyte solution filling channel 211 is blocked by the blocking members 600, to prevent an external foreign object from entering the battery cell 1000 through the electrolyte solution filling channel 211 and also prevent an electrolyte solution in the battery cell 1000 from overflowing through the electrolyte solution filling channel 211, so as to ensure operation performance of the battery cell 1000.

In a specific example, after electrolyte solution filling through the electrolyte solution filling channel 211 is completed, the inlet and the outlet of the electrolyte solution filling channel 211 are blocked by the blocking members 600.

In some embodiments, as shown in FIG. 9 and FIG. 10, a boss 240 surrounding a periphery of the electrolyte solution filling port 276 is arranged on one side of the insulating separator 270. The boss 240 may guide an electrolyte solution flowing out of the electrolyte solution filling port 276 to flow in a direction toward the electrode core 320 to further improve electrolyte solution filling effect.

In some embodiments, as shown in FIG. 9, FIG. 10, and FIG. 12, the second connection piece 120 further includes an avoidance member 123 for avoiding the electrolyte solution filling port 276, to prevent the second connection piece 120 from hindering electrolyte solution filling through the electrolyte solution filling port 276. This ensures that an electrolyte solution following through the electrolyte solution filling port 276 can effectively flow to the electrode core 320, thereby ensuring electrolyte solution filling effect.

In some embodiments, a minimum spacing between the avoidance member 123 and the electrolyte solution filling port 276 ranges from 0 mm to 10 mm. This avoids interference between the collecting pan and the electrolyte solution filling port 276, and can further ensure an area of the collecting pan, so as to ensure a welding area between the collecting pan and the electrode core 320 and improve welding effect.

It should be noted that, as shown in FIG. 9 and FIG. 10, when the boss 240 is arranged at the periphery of the electrolyte solution filling port 276, the minimum spacing between the avoidance member 123 and the electrolyte solution filling port 276 may be understood as a minimum spacing between the avoidance member 123 and the boss 240, that is, T3 shown in FIG. 10. This prevents the collecting pan from blocking the electrolyte solution filling port 276, and can further prevent interference between the collecting pan and the boss 240, to reduce thermal welding deformation of the connection region 121.

A battery assembly according to embodiments of the present disclosure is described below.

A battery assembly according to embodiments of the present disclosure includes multiple battery cells 1000.

The battery cell 1000 is the foregoing battery cell 1000, and a specific structure of the battery cell 1000 is not described in detail herein.

It can be learned from the foregoing structure that, in the battery assembly according to the embodiments of the present disclosure, the foregoing battery cell 1000 is used, to improve operation performance of the battery assembly and ensure safety of using the battery assembly.

It should be noted that the battery assembly herein may be a battery pack or a battery module.

An electric device according to embodiments of the present disclosure is described below.

An electric device according to embodiments of the present disclosure includes a battery assembly.

The battery assembly is the foregoing battery assembly, and a specific structure of the battery assembly is not described in detail herein.

It can be learned from the foregoing structure that, in the electric device according to the embodiments of the present disclosure, the foregoing battery assembly is used, to improve operation performance of the electric device and ensure safety of using the electric device, so as to improve user experience.

It should be noted that the electric device herein may be but is not limited to a mobile phone, a tablet computer, a notebook computer, an electric toy, an electric tool, an electric bicycle, an electric vehicle, a ship, a spacecraft, and the like.

The electric toy may be a fixed or mobile electric toy, for example, a game console, an electric toy car, an electric toy ship, and an electric toy airplane. The spacecraft may include an airplane, a rocket, a space shuttle, a spaceship, and the like. The electric tool includes an electric metal cutting tool, an electric grinding tool, an electric assembly tool, and a railway-specific electric tool, for example, an electric drill, an electric grinder, an electric wrench, an electric screwdriver, an electric hammer, an electric impact drill, a concrete vibrator, and an electric planer.

In the descriptions of the present disclosure, it should be noted that, unless otherwise explicitly specified or defined, the terms "mounting" and "connection" should be understood in a broad sense. For example, the "connection" may be a fixed connection, a detachable connection, or an integral connection, or may be a mechanical connection or an electrical connection. Persons of ordinary skill in the art may understand specific meanings of the foregoing terms in the present disclosure based on specific circumstances.

It should be noted that FIG. 4 shows two protection pieces 800 as an example for description. However, after reading the foregoing technical solutions, persons of ordinary skill in the art can clearly understand that they can apply the solutions to technical solutions with three or more protection pieces 800, which also falls within the protection scope of the present disclosure.

Specific structures of other constituents, such as the electrode core 320, of the cover plate assembly 200 of the battery cell 1000, the battery cell 1000, the battery assembly, and the electric device according to the embodiments of the present disclosure are known to persons of ordinary skill in the art. Details are not described herein.

In the descriptions of this specification, descriptions with reference to the term "embodiment", "example", or the like mean that a specific feature, structure, material, or characteristic described with reference to the embodiment or example is included in at least one embodiment or example of the present disclosure. In this specification, exemplary descriptions of the foregoing terms do not necessarily indicate a same embodiment or example. In addition, specific features, structures, materials, or characteristics in the descriptions may be combined in a proper manner in any one or more embodiments or examples.

Although the embodiments of the present disclosure are shown and described, persons of ordinary skill in the art can understand that various changes, modifications, replacements, and variations may be made to the embodiments without departing from the principle or essence of the present disclosure. The scope of the present disclosure is limited by the claims and their equivalents.

## Claims

1. A cover plate assembly of a battery cell, comprising:
a cover plate body, a peripheral wall of the cover plate body being adapted to connect to a housing of the battery cell; and
an explosion-proof valve, the explosion-proof valve being arranged on the cover plate body, and a value of a minimum spacing between the explosion-proof valve and the peripheral wall of the cover plate body ranging from 0.5 mm to 3.05 mm.

2. The cover plate assembly of the battery cell according to claim 1, wherein the explosion-proof valve extends along a circumferential direction of the cover plate body.

3. The cover plate assembly of the battery cell according to claim 2, wherein the explosion-proof valve is formed into a strip shape extending along the circumferential direction of the cover plate body, a connection line between one endpoint of the explosion-proof valve and a center of the cover plate body is a first connection line, a connection line between the other endpoint of the explosion-proof valve and the center of the cover plate body is a second connection line, and an included angle between the first connection line and the second connection line ranges from 10° to 225°;
optionally wherein the explosion-proof valve is formed into an arc shape extending along the circumferential direction of the cover plate body.

4. The cover plate assembly of the battery cell according to claim 2 or 3, wherein a plurality of explosion-proof valves are arranged on the cover plate body, the plurality of explosion-proof valves are arranged spaced away along the circumferential direction of the cover plate body, and at least one explosion-proof valve extends along the circumferential direction of the cover plate body.

5. The cover plate assembly of the battery cell according to any one of claims 1 to 4, wherein a first mounting hole is provided on the cover plate body, and the explosion-proof valve is arranged in the first mounting hole.

6. The cover plate assembly of the battery cell according to claim 5, wherein the explosion-proof valve is in an arc shape extending along a circumferential direction of the cover plate body, and a shape of the first mounting hole matches the shape of the explosion-proof valve.

7. The cover plate assembly of the battery cell according to claim 5 or 6, wherein at least one first reinforcing rib is arranged in the first mounting hole;
optionally wherein a width of the first reinforcing rib ranges from 0.5 mm to 2.5 mm.

8. The cover plate assembly of the battery cell according to any one of claims 1 to 7, further comprising a terminal, the terminal being arranged on the cover plate body, a peripheral wall of the terminal being connected to the cover plate body, and a value of a minimum spacing between the explosion-proof valve and the peripheral wall of the terminal ranging from 0.5 mm to 20 mm.

9. The cover plate assembly of the battery cell according to any one of claims 5 to 8, wherein further comprising an insulating separator, the insulating separator being arranged on one side of the cover plate body, and a communicating hole that at least partially directly faces the first mounting hole being provided on the insulating separator;
optionally wherein at least one second reinforcing rib is arranged in the communicating hole; further optionally wherein a width of the second reinforcing rib ranges from 0.3 mm to 2 mm.

10. The cover plate assembly of the battery cell according to claim 9, wherein a stop boss is arranged on a first surface, the first surface is away from the cover plate body and the first surface is a surface of the insulating separator, the stop boss is arranged near the communicating hole, and the stop boss is adapted to stop a collecting pan;
optionally wherein a height of the stop boss ranges from 0.5 mm to 2 mm; and/or a side, away from the insulating separator, of the stop boss has a stop surface, the stop surface stops the collecting pan, and an area S of the stop surface ≥ 1.5 mm²;
optionally wherein a plurality of stop bosses are arranged spaced away, and a distance between two adjacent stop bosses located on a same side of the communicating hole is L, wherein 0 mm < L ≤ 6.5 mm.

11. The cover plate assembly of the battery cell according to claim 9 or 10, wherein a peripheral protrusion is arranged at a periphery of a first surface, the first surface is away from the cover plate body and the first surface is of a surface of the insulating separator, and an avoidance port for avoiding a collecting pan is provided on the peripheral protrusion.

12. A battery cell, comprising:
a housing; and
a cover plate body, the cover plate body being arranged in the housing, and the cover plate body being the cover plate assembly according to any one of claims 1 to 11.

13. The battery cell according to claim 12, wherein an explosion-proof valve is in an arc shape extending along a circumferential direction of the cover plate body, and a circle center of the explosion-proof valve coincides with a geometric center of the battery cell.

14. A battery assembly, comprising a plurality of battery cells according to any one of claims 12 to 13.

15. An electric device, comprising the battery assembly according to claim 14.
